# EUROPEAN PATENT SPECIFICATION

(11) **EP 2 222 170 B1**
(45) Date of publication and mention of the grant of the patent: **12.06.2019**
(21) Application number: 08855315.1
(22) Date of filing: 24.11.2008
(51) Int. Cl.: A23L 33/135, A21D 8/04

(54) **PROCESS FOR PREPARING BAKED PROBIOTIC FOOD**
VERFAHREN FÜR DIE ZUBEREITUNG VON PROBIOTISCHEN BACKWAREN
PROCÉDÉ POUR PRÉPARER UN ALIMENT PROBIOTIQUE POUVANT ÊTRE CUIT

(30) Priority: 26.11.2007 IL 18764507
(43) Date of publication of application: 01.09.2010
(73) Proprietor: DeGama Probiotics Ltd., Cayman Islands KY1-104 (KY)
(72) Inventor: ZOREA, Yohai, 88000 Eilat (IL); ZOREA, Carmit, 88000 Eilat (IL); PENHASI, Adel, Holon 58671 (IL)
(74) Representative: Maslanka Kubik, Dorota Irena
(86) International application number: PCT/IL2008/001539
(87) International publication number: WO 2009/069122

(56) References cited:
- EP-A- 1 110 462
- WO-A-94/00019
- WO-A-96/08261
- WO-A-2007/058614
- WO-A-2007/100179
- WO-A1-2009/029267
- DING W., K., & SHAH N., P.: "Acid, Bile and Heat Tolerance of Free and Microencapsulated Probiotic Bacteria", JOURNAL OF FOOD SCIENCE, vol. 72, no. 9, 2007, pages M446-M450,
- THERDTHAI N. ET AL: "Optimisation of the temperaure profile in bread baking", JOURNAL OF FOOD ENGINEERING, vol. 55, 2002, pages 41-48,

## Description

### Field of the Invention

The present invention is related to the health food field. In particularly, the invention is related to probiotic pastry, which comprises a probiotic component, to a process for its production and to its use.

### Background of the Invention

Probiotic bacteria are live microbial food supplements, which beneficially affect the hosting food by improving its microbial balance. A number of different bacteria is used in probiotic foods and is mainly incorporated into milk products such as yogurts. Probiotic bacteria must survive for the lifetime of the product, in order to be effective.

One of the main problems in baked health food, which comprises probiotic bacteria, is the baking temperature. Such temperature may exceed 85 °C (for bread baking, for example), in which probiotic bacteria, or any bacteria, cannot survive.

It is an object of the present invention to provide a process for preparing probiotic bacteria, which are capable of baking, with high rates of survivability of the pro biotic bacteria within limits authorized by the food authorities.

Another object of the present invention is to provide a longer shelf life process for pro-biotic pastry.

Other objects and advantages of the invention will become apparent as the description proceeds.

### Summary of the Invention

The present invention is directed to a process for the preparation of baked food, such as pro-biotic pastry. A solution that comprises pro-biotic material is prepared and then dried and converted to granules, e.g., by freezing. The granules, which have a typical diameter of 10 microns, are encapsulated by a first starch layer with a typical thickness of 5 microns, for resisting stomach pH and then by a second layer with a typical thickness of 5 microns for resisting baking heat for a predetermined baking temperature and baking time. After baking, the second layer is cracked to allow the pro-biotic material to be absorbed by the small intestine of a person eating the baked food. The double encapsulated granules are added to the dough before baking and finally the dough is baked in the predetermined baking temperature for the baking time.

The present invention is also directed to a baked food, such as pro-biotic pastry, for humans consisting of:
a) granules which have a typical diameter of 10 microns, made of a solution that comprises pro-biotic material, which is dried converted to granules, e.g., by freezing and encapsulated by a first layer, preferably a starch layer with a typical thickness of 5 microns, for resisting stomach pH and by a second layer with a typical thickness of 5 microns for resisting baking heat for a predetermined baking temperature and baking time, after which the second layer is being cracked to allow the pro-biotic material to be absorbed by the small intestine of a person eating the baked food; and
b) a dough to which the double encapsulated granules are added before baking in a predetermined baking temperature for a predetermined baking time.

### Detailed Description of Preferred Embodiments

According to the present invention, at the first step, the core is made; a solution that comprises probiotic bacteria is dried at a temperature of a usual process, similar to instant coffee production process, in dry-freeze methods, for a few minutes. At the next step, the dried probiotic substance is granulated by freezing or by any other conventional process. The average diameter of the granules is approximately 10 microns. These granules are then encapsulated by a first 5 microns thick starch layer, such as repellent starch #3 or inactive/over active food starch (brands that are popular in the industry). The first layer's purpose is to resist the stomach pH.

The 2nd layer is either sesame flour or high temperature proof cellulose coating.

In order to be protected from the baking heat, the encapsulated granules are then added to the dough right before baking. The average ratio between the probiotic substance and the rest of the ingredients of the dough is 1:100.

The material the second layer (external) is made out of, will be cracked at the end of the baking process, Which allows the probiotic material to be released from the digested product and absorbed in the small intestine.

### Example 1: A Probiotic Biscuit

This probiotic biscuit is made up of 0.3 g of filling and 30 g of Biscuit. Filling: The following ingredients are mixed at room temperature (percentages are weight percentages, based on the total filling weight):
Biscuit recipe: 1 part sugar, 2 parts margarine, 3 parts flour mixed with 1 percent of the Probiotic powder

### Bacteria Survival in Simulation:

According to our preliminary results, the max temperature possible is 200°C for up to 4.5 minutes which suits most industrial biscuit production.

### Bacteria Survival in Experimental results:

At the above-mentioned terms, we reach up to 50% of live bacteria after baking.

### Example 2: Probiotic Bread

This probiotic bread is made up of 0.3 g of filling and 30 g of bread.

### Filling

The following ingredients are mixed at room temperature (percentages are weight percentages, based on the total filling weight):
This product is meant for mass production. It is applied as a baking agent - as little as 1% of the flour weight.

### Bacteria Survival in Simulation:

The level of bacteria survival obtained in simulation was between 50% to 80%.

### Bacteria Survival in Experimental results:

Up to 83% live bacteria have been obtained after 10 minutes baking at 200°C with a starting point of 10⁹ bacteria per gram.

## Claims

1. Process for the preparation of baked food, comprising:
a) preparing a solution that comprises pro-biotic material;
b) drying and granulating said solution and converting it to granules;
c) encapsulating said granules by a first starch layer for resisting stomach pH, wherein said first layer is a 5 microns starch layer;
d) further encapsulating the encapsulated granules by a second layer for resisting baking heat for a predetermined baking temperature and baking time, after which said second layer is being cracked to allow the live pro-biotic material to be absorbed by the small intestine of a person eating said baked food, wherein said layer is sesame flour or high temperature proof-cellulose;
e) adding the double encapsulated granules to the dough before baking; and
f) baking said dough in said predetermined baking temperature for said baking time.

2. Process according to claim 1, wherein the baked food is pro-biotic pastry.

3. Process according to claim 1, wherein the dried solution is granulated by freezing.

4. Process according to claim 1, wherein the solution is converted to 10-microns granules.

5. Process according to claim 1, wherein the second layer is a 5 microns layer.

6. A baked food for humans consisting of:
a) granules made of a solution that comprises pro-biotic material, which is dried and encapsulated by a first starch layer for resisting stomach pH, said granules being encapsulated by a 5 microns starch layer, and by a second layer, wherein second layer is sesame flour or high temperature proof cellulose for resisting baking heat for a predetermined baking temperature and baking time, after which said second layer is being cracked to allow the live pro-biotic material to be absorbed by the small intestine of a person eating said baked food; and
b) a dough to which the double encapsulated granules are added before baking.

7. A baked food according to claim 6, which is pro-biotic pastry.

8. A baked food according to claim 6, which comprises granules made by freezing said solution.

9. A baked food according to claim 6, which comprises 10-microns granules.

10. A baked food for according to claim 6, which comprises granules that are further encapsulated by a second 5 microns layer.

## Patentansprüche

1. Verfahren zur Herstellung von Backwaren, umfassend:
a) Herstellen einer Lösung, die probiotisches Material umfasst;
b) Trocknen und Granulieren der genannten Lösung und Umwandeln in Granulat;
c) Einkapseln des genannten Granulats durch eine erste Stärkeschicht zum Schutz vor Magen-pH, wobei die genannte erste Schicht eine 5 Mikrometer dicke Stärkeschicht ist;
d) weiteres Einkapseln des eingekapselten Granulats durch eine zweite Schicht zum Schutz vor der Backhitze einer vorgegebenen Backtemperatur und Backzeit, wonach die genannte zweite Schicht aufgebrochen wird, damit das aktive probiotische Material vom Dünndarm einer Person, die die genannten Backwaren isst, aufgenommen werden kann, wobei die genannte Schicht Sesammehl oder hochtemperaturbeständige Cellulose ist;
e) Zugeben des doppelt eingekapselten Granulats in den Teig vor dem Backen; und
f) Backen des genannten Teigs bei der genannten vorgegebenen Backtemperatur für die genannte Backzeit.

2. Verfahren nach Anspruch 1, wobei die Backwaren probiotisches Gebäck sind.

3. Verfahren nach Anspruch 1, wobei die getrocknete Lösung durch Gefrieren granuliert wird.

4. Verfahren nach Anspruch 1, wobei die Lösung in 10-Mikrometer-Granulat umgewandelt wird.

5. Verfahren nach Anspruch 1, wobei die zweite Schicht eine 5 Mikrometer dicke Schicht ist.

6. Backware für den menschlichen Verzehr, bestehend aus:
a) Granulat hergestellt aus einer Lösung, die probiotisches Material umfasst, das getrocknet und von einer ersten Stärkeschicht zum Schutz vor Magen-pH eingekapselt ist, wobei das genannte Granulat von einer 5 Mikrometer dicken Stärkeschicht und einer zweiten Schicht eingekapselt ist, wobei die zweite Schicht Sesammehl oder hochtemperaturfeste Cellulose zum Schutz vor der Backhitze einer vorgegebenen Backtemperatur und Backzeit ist, wonach die genannte zweite Schicht aufgebrochen wird, damit das aktive probiotische Material vom Dünndarm einer Person, die die genannte Backware isst, aufgenommen werden kann; und
b) einem Teig, dem das doppelt eingekapselte Granulat vor dem Backen zugegeben wird.

7. Backwaren nach Anspruch 6, die probiotisches Gebäck sind.

8. Backwaren nach Anspruch 6, umfassend Granulat, das durch Gefrieren der genannten Lösung hergestellt wurde.

9. Backwaren nach Anspruch 6, die 10-Mikrometer-Granulat umfassen.

10. Backwaren nach Anspruch 6, umfassend Granulat, das zudem von einer zweiten, 5 Mikrometer dicken, Schicht eingekapselt ist.

## Revendications

1. Procédé de préparation d'un aliment cuit, comprenant :
a) préparer une solution qui comprend une matière pro-biotique ;
b) sécher et granuler ladite solution et la convertir en granules ;
c) encapsuler lesdits granules par une première couche d'amidon pour résister au pH de l'estomac, dans lequel ladite première couche est une couche d'amidon de 5 microns ;
d) encapsuler en outre les granules encapsulés par une seconde couche pour résister à la chaleur de cuisson pour une température de cuisson et un temps de cuisson prédéterminés, après quoi ladite seconde couche est fissurée pour permettre à la matière pro-biotique vivant d'être absorbée par l'intestin grêle d'une personne consommant ledit aliment cuit, dans lequel ladite couche est une farine de sésame ou une cellulose résistant aux hautes températures ;
e) ajouter les granules doublement enrobés à la pâte avant la cuisson ; et
f) cuire ladite pâte dans ladite température de cuisson prédéterminée pendant ledit temps de cuisson.

2. Procédé selon la revendication 1, dans lequel l'aliment cuit est un produit de pâtisserie pro-biotique.

3. Procédé selon la revendication 1, dans lequel la solution séchée est granulée par congélation.

4. Procédé selon la revendication 1, dans lequel la solution est convertie en granules de 10 microns.

5. Procédé selon la revendication 1, dans lequel la deuxième couche est une couche de 5 microns.

6. Aliment cuit pour les humains composé de :
a) granules faits d'une solution qui comprend une matière pro-biotique, qui est séchée et encapsulée par une première couche d'amidon pour résister au pH gastrique, lesdits granules étant encapsulés par une couche d'amidon de 5 microns, et par une seconde couche, dans lequel la seconde couche est une farine de sésame ou une cellulose résistant aux hautes températures pour résister à la chaleur de cuisson pour une température de cuisson et un temps de cuisson prédéterminés, après quoi ladite seconde couche est fissurée pour permettre à la matière pro-biotique vivant d'être absorbée par l'intestin grêle d'une personne consommant ledit aliment cuit ; et
b) une pâte à laquelle les granules doublement enrobés sont ajoutés avant la cuisson.

7. Aliment cuit selon la revendication 6, qui est un produit de pâtisserie pro-biotique.

8. Aliment cuit selon la revendication 6, qui comprend des granules obtenus par congélation de ladite solution.

9. Aliment cuit selon la revendication 6, qui comprend des granules de 10 microns.

10. Aliment cuit selon la revendication 6, qui comprend des granules qui sont en outre encapsulés par une deuxième couche de 5 microns.
